# FASCICULE DE BREVET EUROPEEN

(11) **EP 4 435 296 B1**
(45) Date de publication et mention de la délivrance du brevet: **18.02.2026**
(21) Numéro de dépôt: 24164341.0
(22) Date de dépôt: 19.03.2024
(51) Int. Cl.: F16H 57/04

(54) **REDUCTEUR DE VITESSE POUR GROUPE MOTOPROPULSEUR**
DREHZAHLMINDERER FÜR EINEN ANTRIEBSSTRANG
SPEED REDUCER FOR A POWER TRAIN

(30) Priorité: 20.03.2023 FR 2302569
(43) Date de publication de la demande: 25.09.2024
(73) Titulaire: VALEO EMBRAYAGES, 80009 Amiens (FR)
(72) Inventeur: CHERON, Antonin, 80009 AMIENS (FR); DHALLEINE, Christophe, 80009 AMIENS (FR); KRAEMER, Philippe, 80009 AMIENS (FR)
(74) Mandataire: Valeo Powertrain Systems

(56) Documents cités:
- DE-A1- 10 254 572
- FR-A1- 2 982 003
- US-A- 3 529 698

## Description

### DOMAINE TECHNIQUE DE L'INVENTION

L'invention concerne, de façon générale, le domaine technique des réducteurs de vitesse, en particulier leurs moyens de lubrification.

### ÉTAT DE LA TECHNIQUE ANTÉRIEURE

Pour lubrifier un dispositif de réduction de vitesse, en particulier les roulements, les engrenages..., les réducteurs peuvent être dotés d'une pompe qui fait circuler un lubrifiant tel que de l'huile dans un circuit de lubrification configuré pour atteindre différentes zones spécifiques à lubrifier. Ces dispositifs de lubrification des réducteurs sont dits « actifs ». Un tel dispositif est par exemple décrit dans le document FR2982003, dans lequel une pompe alimente en huile une boite de vitesses par l'intermédiaire d'une goulotte faisant office de réservoir au sein du carter de la boite de vitesses. La goulotte alimente en huile les arbres tournants de la boite de vitesses par l'intermédiaires d'une pluralité d'orifices. Ce dispositif présente l'inconvénient d'être consommateur d'énergie pour faire fonctionner la pompe et encombrant un axe vertical étant donné que l'unique réservoir de la goulotte est disposé au-dessus des arbres, notamment entre un arbre secondaire et la paroi supérieure du carter. [Un réducteur selon le préambule de la revendication 1 est connu du US3529698A.]

Il existe aussi des dispositifs de lubrification dits « passifs », c'est-à-dire dépourvus de pompe, dans lesquels des rampes sont formées au sein du carter pour favoriser les remontées de lubrifiant du bas du réducteur vers le haut et disperser ainsi le lubrifiant dans différentes zones du réducteur.

Ces solutions de lubrification passive ne donnent toutefois pas entière satisfaction et la remontée de lubrifiant du bas vers le haut du réducteur n'est parfois pas suffisante, en particulier lorsque des éléments du dispositif de réduction, par exemple un arbre de transmission portant des roues dentées, font obstacle à la remontée du lubrifiant vers le haut du réducteur.

### EXPOSE DE L'INVENTION

L'invention vise à remédier à ce problème en proposant un réducteur de vitesse pour un groupe motopropulseur [selon la reveidication 1].

Ce réducteur de vitesse avec son dispositif de lubrification présente l'avantage de récupérer et de distribuer une quantité importante de lubrifiant présent au sein du réducteur de vitesse, tout en conservant le principe de lubrification passive. La paroi périphérique du carter participe à la récupération de lubrifiant en étant disposée à proximité de la partie supérieure du collecteur, le lubrifiant retombant par gravité dans le collecteur. Le collecteur occupe une position centrale au sein du réducteur de vitesse ce qui lui permet de recevoir toutes les projections de lubrifiant en provenance de la première roue dentée mais aussi d'autres roues dentées présentes également au sein du réducteur de vitesse.

Avantageusement, la périphérie externe de la première roue dentée peut s'étendre radialement au-delà du pourtour extérieur du premier réservoir ou du deuxième réservoir. On facilite de cette manière la récupération du lubrifiant.

De préférence, au moins le premier réservoir peut comprendre une portion de surface cylindrique concentrique au premier axe de rotation. Avantageusement, le deuxième réservoir peut comprendre une portion de surface cylindrique concentrique au premier axe de rotation. Selon une alternative, le premier réservoir et le deuxième réservoir peuvent comprendre chacun une portion de surface cylindrique concentrique au premier axe de rotation. Ainsi, on guide et dirige le lubrifiant depuis la denture de la première roue dentée jusqu'au collecteur.

Avantageusement, le premier réservoir et le deuxième réservoir peuvent être disposés de part et d'autre d'un premier plan géométrique passant par le premier axe de rotation et le deuxième axe du repère orthogonal perpendiculaire au premier axe de rotation, le premier plan géométrique traversant la paroi périphérique du carter selon une direction sensiblement perpendiculaire à celle-ci.

De préférence, le premier réservoir peut comprendre un premier fond et le deuxième réservoir peut comprendre un deuxième fond, le premier fond étant décalé axialement par rapport au deuxième fond selon le deuxième axe du repère orthogonal.

Avantageusement, [le premier réservoir et le deuxième réservoir peuvent être reliés par l'intermédiaire d'une première gouttière acheminante le lubrifiant depuis le premier réservoir vers le deuxième réservoir sous l'effet de la gravité,] le premier réservoir et le deuxième réservoir peuvent être reliés par l'intermédiaire d'une deuxième gouttière acheminant le lubrifiant depuis le premier réservoir vers le deuxième réservoir sous l'effet de la gravité, de sorte que le premier réservoir, le deuxième réservoir, la première gouttière et la deuxième gouttière forment un récipient commun apte à recevoir le lubrifiant projeté au sein du carter. Ainsi, il est possible de distribuer le lubrifiant vers différentes zones du collecteur.

[Selon l'invention,] le premier réservoir et le deuxième réservoir [sont] reliés par l'intermédiaire d'une première gouttière et d'une deuxième gouttière distinctes distribuant le lubrifiant indifféremment entre le premier réservoir et le deuxième réservoir sous l'effet de la gravité, de sorte que le premier réservoir, le deuxième réservoir, la première gouttière et la deuxième gouttière forment un récipient commun apte à recevoir le lubrifiant projeté au sein du carter. Ainsi, il est possible de distribuer le lubrifiant vers différentes zones du collecteur.

De préférence, la première gouttière et la deuxième gouttière peuvent être espacées axialement selon le premier axe de rotation et disposés de part et d'autre d'une ouverture centrale pour laisser passer les projections de lubrifiant issues de la denture de la première roue dentée.

Avantageusement, le dispositif de réduction peut comprendre un deuxième arbre s'étendant le long d'un deuxième axe de rotation et portant de façon coaxiale une roue dentée d'entrée de différentiel, la roue dentée d'entrée de différentiel étant immergée partiellement dans du lubrifiant, et un déflecteur disposé dans le carter comprenant une rampe apte à guider le lubrifiant en direction de la première roue dentée. La combinaison de la rampe et du collecteur comportant une ouverture centrale permet d'augmenter la quantité de lubrifiant récupérée dans le récipient.

De préférence, la rampe peut comprendre une surface cylindrique de guidage du lubrifiant concentrique à la roue dentée d'entrée de différentiel et qui s'étend en direction du premier axe de rotation de la première roue dentée. Ainsi, en s'approchant du premier axe de rotation, il est possible de faire remonter la rampe plus haut dans le réducteur de vitesse malgré la présence d'un arbre de transmission. On favorise ainsi l'écoulement du lubrifiant vers le haut du réducteur de vitesse. Avec les déflecteurs connus de l'état de la technique dans lesquels les déflecteurs sont formés dans la masse des carters, l'implantation des déflecteurs est limitée et l'écoulement du lubrifiant vers le haut du réducteur de vitesse est parfois insuffisant.

Avantageusement, le carter peut comporter sur la face interne de la paroi périphérique au moins un larmier situé à l'aplomb du collecteur de réception et de distribution de lubrifiant, le larmier prenant la forme d'une excroissance de matière. Par exemple, le profil du larmier peut être linéique et orienté dans le sens de démoulage du carter lorsque celui-ci est obtenu par fonderie. Selon un autre exemple, le larmier peut être en forme de cône. Selon un autre exemple, le larmier peut être usiné directement dans le carter. Le larmier permet de récupérer davantage de lubrifiant au sein du collecteur. Le lubrifiant qui ruissèle le long de la paroi périphérique retourne préférentiellement au sein du collecteur en suivant la forme du larmier plutôt que de retourner directement dans le fond du réducteur de vitesse. Le lubrifiant retombe dans le collecteur en coulant goutte à goutte depuis le larmier.

Le réducteur de vitesse selon l'invention peut présenter l'une ou l'autre des caractéristiques décrites ci-dessous combinées entre elles ou prises indépendamment les unes des autres :
- le premier réservoir et le deuxième réservoir sont disposés de part et d'autre d'un premier plan géométrique passant par le premier axe de rotation et le deuxième axe du repère orthogonal perpendiculaire au premier axe de rotation, le premier plan géométrique traversant la paroi périphérique du carter selon une direction sensiblement perpendiculaire à celle-ci.
- la première roue dentée tourne autour du premier axe de rotation selon un sens privilégié, le premier réservoir faisant face à la première roue dentée de manière à recevoir le lubrifiant projeté par la denture. Selon un exemple, le sens privilégié de rotation de la première roue dentée est celui qui permet au véhicule automobile d'avancer en marche avant.
- la paroi périphérique du carter comprend une surface cylindrique coaxiale au premier axe de rotation qui entoure partiellement la périphérie externe de la première roue dentée.
- le déflecteur est fabriqué dans une pièce distincte du carter et dans lequel la rampe comprend un secteur d'écoulement situé à l'extrémité de la rampe et qui est logé dans le flan creusé de la première roue dentée.
- le secteur d'écoulement est disposé au moins en partie dans un espace en forme de cylindre circulaire droit centré sur le premier axe de rotation.
- le déflecteur est fixe par rapport au carter.
- le déflecteur comporte une portion de montage comprenant une pluralité d'éléments de fixation coopérant avec des éléments de fixation complémentaires agencés dans le carter du réducteur.
- le premier arbre porte de façon coaxiale une pluralité de roues dentées, et le secteur d'écoulement est également disposé plus proche du premier axe de rotation que la périphérie radialement externe de la roue dentée de plus grand diamètre portée par le premier arbre.
- la première roue dentée est agencée au-dessus du niveau du lubrifiant, par exemple de l'huile, en particulier au-dessus du niveau nominal NN.
- un couvercle de fermeture est rapporté sur le carter de sorte à former une enceinte close autour du dispositif de réduction, le collecteur de réception et de distribution de lubrifiant étant maintenu en position partiellement par le carter et partiellement par le couvercle de fermeture.
- le couvercle de fermeture comporte sur sa face interne au moins un larmier situé à l'aplomb du collecteur.
- le déflecteur est partiellement issu de matière dans le carter ou dans le couvercle de fermeture.
- le réducteur de vitesse comprend du lubrifiant contenu dans le carter.
- le collecteur de réception et de distribution de lubrifiant comprend au moins un fond, un pourtour extérieur et une ouverture centrale disposée entre le premier réservoir et le deuxième réservoir au sein de laquelle la première roue dentée est insérée partiellement de manière à pouvoir projeter du lubrifiant depuis la denture vers le fond du collecteur de réception et de distribution de lubrifiant, le fond du collecteur de réception et de distribution de lubrifiant entourant complètement l'ouverture centrale.

[Par exemple,] un groupe motopropulseur [peut comprendre] une machiné électrique et un réducteur de vitesse tel que décrit précédemment. Le cas échéant, la machine électrique comprend un arbre de rotor qui peut être coaxial et solidaire en rotation avec l'arbre d'entrée du réducteur de vitesse.

D'autres caractéristiques et avantages de l'invention sont mis en évidence par la description ci-après d'exemples non limitatifs de réalisation des différents aspects de l'invention.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue de face partielle d'un réducteur de vitesse selon un premier mode de réalisation, représenté sans le couvercle de fermeture.
[Fig. 2] : une vue de dessus du réducteur de vitesse de la figure 1.
[Fig. 3] : une vue de face d'un réducteur de vitesse, selon un deuxième mode de réalisation, représenté sans le couvercle de fermeture.
[Fig. 4] : une vue de détail schématisant le montage du déflecteur du deuxième mode de réalisation dans le carter (sans la roue d'entrée du différentiel).
[Fig. 5] : une vue de dessus du réducteur de vitesse selon le deuxième mode de réalisation de la figure 3.
[Fig. 6] : une vue isométrique du collecteur du réducteur de vitesse selon le deuxième mode de réalisation de la figure 3.
[Fig. 7] : une vue de face partielle d'un réducteur de vitesse selon un troisième mode de réalisation.

### DESCRIPTION DÉTAILLÉE D'UN MODE DE RÉALISATION

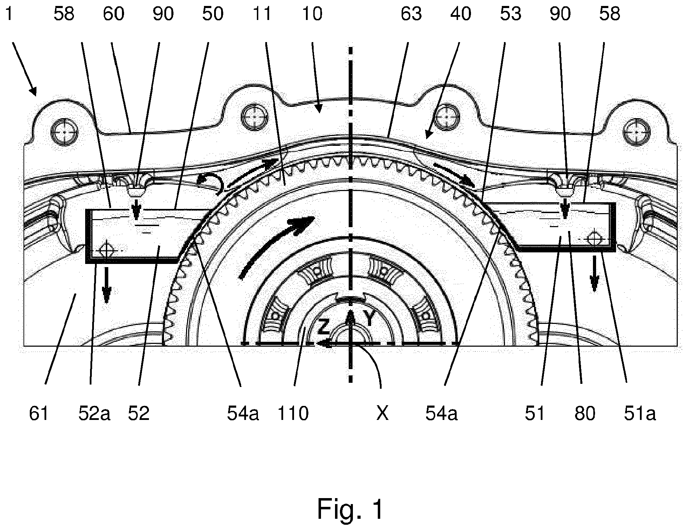

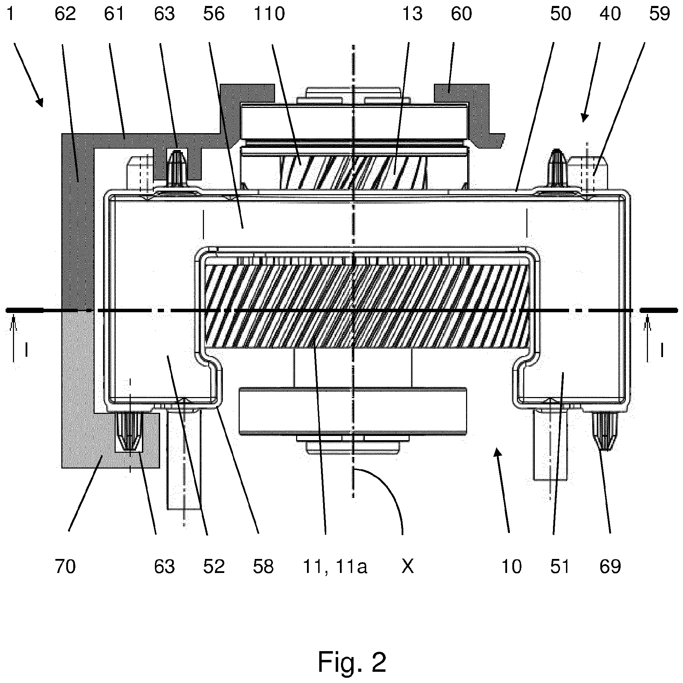

On a représenté sur les figures 1 et 2 un réducteur de vitesse 1 de véhicule automobile selon un premier mode de réalisation de l'invention. Ce réducteur de vitesse est généralement intégré au sein d'un groupe motopropulseur principal d'un véhicule, notamment d'un véhicule automobile électrique, ou bien un groupe motopropulseur secondaire. Par exemple, il peut s'agir d'un groupe motopropulseur électrique secondaire d'un véhicule hybride, en particulier destiné au train arrière du véhicule.

Le réducteur de vitesse 1 comprend, notamment dans un repère orthogonal XYZ, un premier arbre 110 s'étendant le long d'un premier axe de rotation X et portant de façon coaxiale une première roue dentée 11 et un carter 60 en forme de creux comprenant une embase 61 et une paroi périphérique 62 issue de matière avec l'embase. La paroi périphérique 62 entoure en partie la première roue dentée 11. Dans cet exemple, le réducteur de vitesse comprend un seul rapport de vitesse.

Dans le repère orthogonal XYZ, les plans XY, YZ et XZ sont perpendiculaires entre eux.

Dans la description qui suit, le premier axe de rotation est appelé axe de rotation X, le deuxième axe de rotation est appelé axe de rotation X2, et le troisième axe de rotation est appelé axe de rotation X3.

Dans la description et les revendications, on utilisera, les termes « externe » et « interne » ainsi que les orientations « axiale » et « radiale » pour désigner, selon les définitions données dans la description, des éléments du système de transmission. Par convention, l'orientation « axiale » se rapporte aux axes de référence X, Y ou Z ou à des directions parallèles à ces axes, et l'orientation « radiale » est dirigée orthogonalement aux axes de référence X, Y et Z. Un élément « radialement interne » est situé plus proche de l'axe de référence qu'un élément « radialement externe ».

Le premier arbre mentionné précédemment ainsi que dans le jeu de revendication correspond à l'arbre intermédiaire 110 du dispositif de réduction 10 qui sera décrit ci-dessous dans les modes de réalisation.

Les termes « supérieur », « inférieur », « haut », « bas », et « fond » doivent être pris en considération en regardant le réducteur de vitesse dans une position/inclinaison similaire à la sienne lorsqu'il est monté sur un véhicule stationné à l'horizontale.

La figure 1 est une vue simplifiée de face d'un réducteur de vitesse 1 selon [un] mode de réalisation [, qui n'est pas revendiqué,] représenté sans son couvercle de fermeture de manière à visualiser l'intérieur du réducteur de vitesse. La figure 2 représente partiellement le même réducteur de vitesse 1 en vue de dessus.

Sur la figure 1, le réducteur de vitesse est représenté dans une position correspondant à sa position lorsqu'il est monté dans un véhicule stationné sur un plan horizontal. Il comporte une partie relativement basse et une partie relativement haute.

Le dispositif de réduction 10 comprend généralement :
- un arbre d'entrée 100 destiné à être entrainé par un moteur, en particulier une machine électrique, autour d'un troisième axe de rotation X3,
- un deuxième arbre 120 s'étendant le long d'un deuxième axe de rotation X2 et portant de façon coaxiale une roue d'entrée de différentiel 30, ainsi qu'un pont différentiel apte à entrainer en rotation deux demi arbres selon un deuxième axe de rotation X2,
- un arbre intermédiaire 110 mobile en rotation autour du premier axe de rotation X, et apte à transmettre un couple entre l'arbre d'entrée 100 et la roue d'entrée de différentiel 30.

Le dispositif de réduction 10 est logé généralement dans une enceinte close formée par le carter 60 et un couvercle de fermeture 70 rapporté sur le carter.

Afin d'améliorer la lubrification au sein du réducteur de vitesse 1, celui-ci comporte notamment un dispositif de lubrification 40 comprenant :
- un collecteur 50 de réception et de distribution de lubrifiant comprenant au moins un fond 51a et un pourtour extérieur 58 ;
- la première roue dentée 11 mobile en rotation autour du premier axe de rotation X ; dans lequel le collecteur 50 comporte une échancrure au sein de laquelle la première roue dentée 11 est insérée partiellement de manière à pouvoir projeter du lubrifiant depuis la denture vers le collecteur.

Le collecteur 50 de réception et de distribution de lubrifiant disposée dans le carter 60 entre la paroi périphérique 62 et le premier axe de rotation X. Ce collecteur 50 a la particularité de comprendre un premier réservoir 51 et un deuxième réservoir 52 disposés de part et d'autre de la première roue dentée. Notamment, le premier réservoir 51 et le deuxième réservoir 52 sont disposés de part et d'autre d'un premier plan géométrique XY passant par le premier axe de rotation X et le deuxième axe Y du repère orthogonal perpendiculaire au premier axe de rotation X, le premier plan géométrique XY traversant la paroi périphérique 62 du carter selon une direction sensiblement perpendiculaire à celle-ci. Le collecteur 50 de réception et de distribution de lubrifiant est maintenu en position partiellement par le carter 60 et partiellement par le couvercle de fermeture 70.

Afin de rendre plus compact le réducteur de vitesse, la paroi périphérique 62 du carter 60 comprend une surface cylindrique 63 coaxiale à l'axe de rotation X qui entoure partiellement la périphérie externe de la première roue dentée. Le deuxième axe Y définit alors une normale à la surface cylindrique 63.

La figure 1 illustre la lubrification de ce dispositif de réduction qui est partiellement réalisée par la projection de lubrifiant (représenté par les flèches noires), par exemple de l'huile 80, convoyé par la première roue dentée. L'huile en provenance du fond du réducteur est remontée vers le haut par l'intermédiaire de la rotation de la première roue dentée, puis est projetée vers la paroi périphérique 62 et en direction du premier réservoir 51. Etant donné que la périphérie externe 11a de la première roue dentée 11 s'étend radialement au-delà du pourtour extérieur 58 du premier réservoir et du deuxième réservoir, le lubrifiant peut facilement retomber dans le collecteur.

La première roue dentée 11 tourne autour du premier axe de rotation X selon un sens privilégié. Dans cet exemple, le sens privilégié de rotation de la première roue dentée est celui qui permet au véhicule automobile d'avancer en marche avant. Le premier réservoir 51 faisant face à la première roue dentée 11 reçoit le lubrifiant projeté par la denture. Une autre partie du lubrifiant retombe également dans le deuxième réservoir 52.

Le premier réservoir 51 comprend un premier fond 51a et le deuxième réservoir 52 comprend un deuxième fond 52a, le premier fond étant décalé axialement par rapport au deuxième fond selon le deuxième axe Y du repère orthogonal.

Comme illustré sur la figure 2, le premier réservoir 51 et le deuxième réservoir 52 sont reliés par l'intermédiaire d'une première gouttière 56 acheminant le lubrifiant depuis le premier réservoir vers le deuxième réservoir sous l'effet de la gravité. Ainsi, il est possible de distribuer le lubrifiant vers différentes zones du collecteur. Le collecteur présente dans cet exemple une forme de U. Les deux réservoirs 51, 52 s'étendent parallèlement à l'axe de rotation X. Le collecteur 50 de réception et de distribution de lubrifiant comporte une pluralité de trous ou conduites 59 permettant de laisser couler des filets d'huile de lubrification sur différentes zones du réducteur de vitesse.

Le carter 60 comporte sur la face interne de la paroi périphérique 62 deux larmiers 69 situés à l'aplomb du collecteur 50, le larmier 69 prenant la forme d'une excroissance de matière. Les larmiers 69 permettent de récupérer davantage de lubrifiant au sein du collecteur.

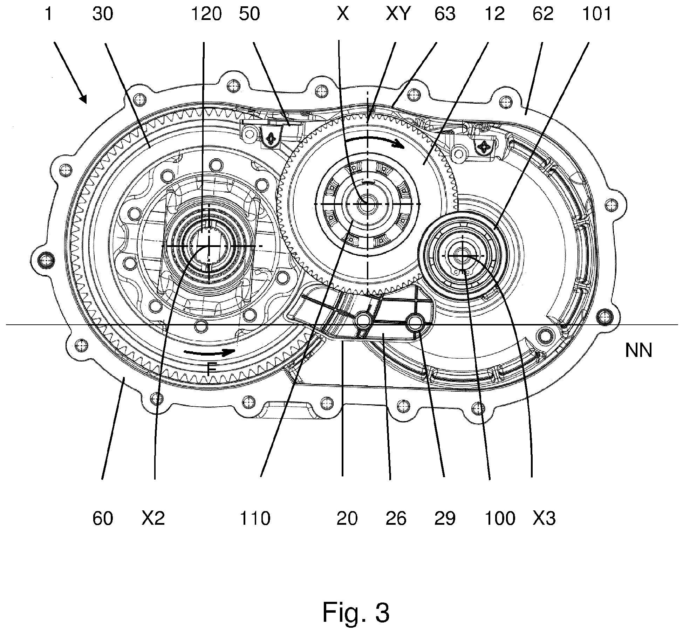

On va maintenant décrire en référence aux figures 3 à 6, un réducteur de vitesse 1 selon un deuxième mode de réalisation de l'invention qui se distingue du premier mode par le fait que le premier réservoir 51 et le deuxième réservoir 52 du collecteur 50 de réception et de distribution de lubrifiant reliés par l'intermédiaire d'une deuxième gouttière 57 acheminant le lubrifiant depuis le premier réservoir vers le deuxième réservoir sous l'effet de la gravité. Ainsi, le premier réservoir 51, le deuxième réservoir 52, la première gouttière 56 et la deuxième gouttière 57 forment un récipient commun apte à recevoir le lubrifiant projeté au sein du carter 60.

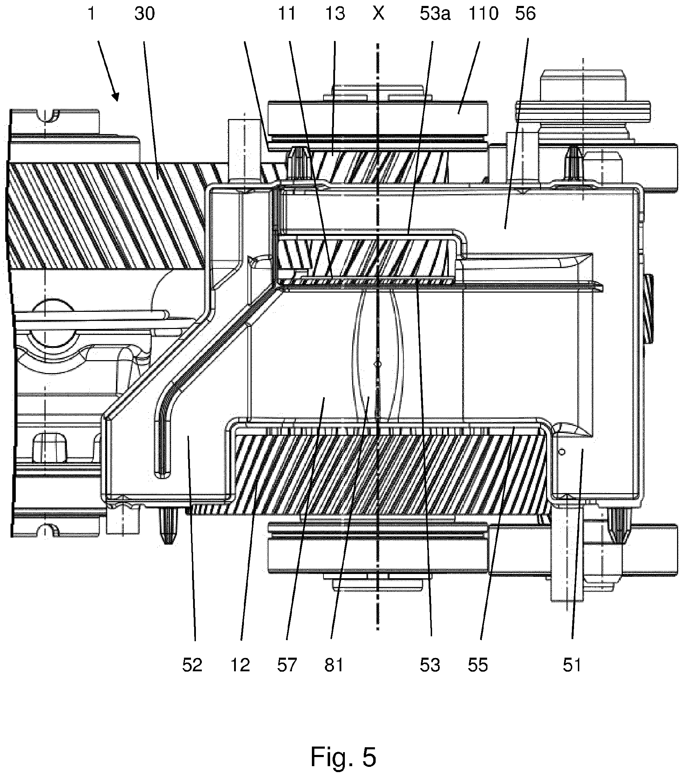

Le collecteur 50 de réception et de distribution de lubrifiant comporte une ouverture centrale 53 au sein de laquelle la première roue dentée 11 est insérée partiellement de manière à pouvoir projeter du lubrifiant depuis la denture vers le collecteur de réception et de distribution de lubrifiant. Le pourtour intérieur 53a de l'ouverture centrale 53 délimite les parois intérieures du collecteur. Comme illustré sur la figure 5, le pourtour intérieur 53a présente en vue de dessus une forme rectangulaire.

Le réducteur de vitesse 1 selon ce deuxième mode de réalisation est à deux rapports de vitesse. Il comprend notamment :
- un arbre d'entrée 100 destiné à être entrainé par un moteur, en particulier une machine électrique, autour d'un troisième axe de rotation X3,
- un deuxième arbre 120 s'étendant le long d'un deuxième axe de rotation X2 et portant de façon coaxiale une roue d'entrée de différentiel 30, ainsi qu'un pont différentiel apte à entrainer en rotation deux demi arbres selon un deuxième axe de rotation X2,
- un arbre intermédiaire 110 mobile en rotation autour du premier axe de rotation X, et apte à transmettre un couple entre l'arbre d'entrée 100 et la roue dentée d'entrée de différentiel 30.

L'arbre d'entrée 100 est apte à être entrainé de façon coaxiale par un arbre de rotor de machine électrique, notamment au moyen de cannelures.

La roue dentée d'entrée de différentiel 30 entraine de façon connue le pont de différentiel en rotation autour de l'axe de rotation Y. La roue dentée d'entrée de différentiel 30 est la roue d'entrainement du dispositif d'entrainement différentiel.

Les axes de rotation X, X2 et X3 sont parallèles.

Le réducteur de vitesse 1 comprend un premier étage de réduction double E1 entre l'arbre d'entrée 100 et l'arbre intermédiaire 110 et un deuxième étage de réduction E2 entre l'arbre intermédiaire 110 et la roue dentée d'entrée de différentiel 30.

Le premier étage de réduction double E1 comprend :
- d'une part, pour le premier rapport, un premier pignon 101 solidaire en rotation de l'arbre d'entrée 100 par rapport à l'axe de rotation Z ainsi qu'une deuxième roue dentée 12 engrenant avec le premier pignon 101 et apte à entrainer en rotation l'arbre intermédiaire 110 autour de l'axe de rotation X ; et
- d'autre part, pour le deuxième rapport, un deuxième pignon 102 solidaire en rotation de l'arbre d'entrée 100 par rapport à l'axe de rotation Z ainsi que la première roue dentée 11 engrenant avec le deuxième pignon 102 et apte à entrainer en rotation l'arbre intermédiaire 110 autour de l'axe de rotation X.

Le changement de rapport de vitesse intervient au niveau du premier étage de réduction double E1 au moyen d'un dispositif de sélection de vitesse (non représenté).

Ainsi, le premier arbre 110 correspondant à l'arbre intermédiaire porte de façon coaxiale une pluralité de roues dentées, la première roue dentée 11, la deuxième roue dentée 12 et un pignon de sortie 13 liée cinématiquement avec la roue dentée d'entrée de différentiel 30.

Le dispositif de réduction 10, en particulier les paliers supportant les arbres 100, 110, l'engrènement entre les pignons 101, 102 et les roues dentées 11, 12, l'engrènement entre le pignon de sortie 13 et la roue dentée d'entrée de différentiel 30 ainsi que le manchon de crabotage nécessitent d'être lubrifiés, notamment avec de l'huile. La lubrification du réducteur est ici passive. Autrement dit elle ne comporte pas de pompe dédiée à la mise en circulation d'un lubrifiant au sein du réducteur. La lubrification repose doc ici sur la présence d'un bain d'huile au fond du réducteur et sur un acheminement de cette huile en direction des différents éléments du réducteur à lubrifier (paliers, engrènements, dentures de crabotage) grâce, notamment, aux projections d'huile provoquées par la rotation de la roue d'entrée de différentiel 30, des pignons 101, 102, 13 et des roues dentées 11, 12, et grâce à la gravité.

Lorsque le véhicule est à l'arrêt, une portion basse de la roue dentée d'entrée de différentiel 30 est immergée dans le bain d'huile. Lorsque le véhicule est en mouvement, la roue dentée d'entrée de différentiel 30 tourne autour du deuxième axe de rotation X2, ce qui permet de disperser de l'huile, notamment de la faire remonter comme indiqué par la flèche F. Le niveau d'huile au fond du réducteur est indiqué par le repère NN.

Pour améliorer la lubrification passive du réducteur, un déflecteur 20 est agencé, en partie basse du réducteur, pour favoriser la remontée du lubrifiant et un collecteur 50 de réception et de distribution de lubrifiant est agencé en partie haute de façon à, d'une part, réceptionner le lubrifiant qui été préalablement remonté et, d'autre part, à rediriger le lubrifiant en différents points du réducteur de vitesse, en particulier par gravité. Le déflecteur 20 permet notamment de guider la projection d'huile sur la première roue dentée 11.

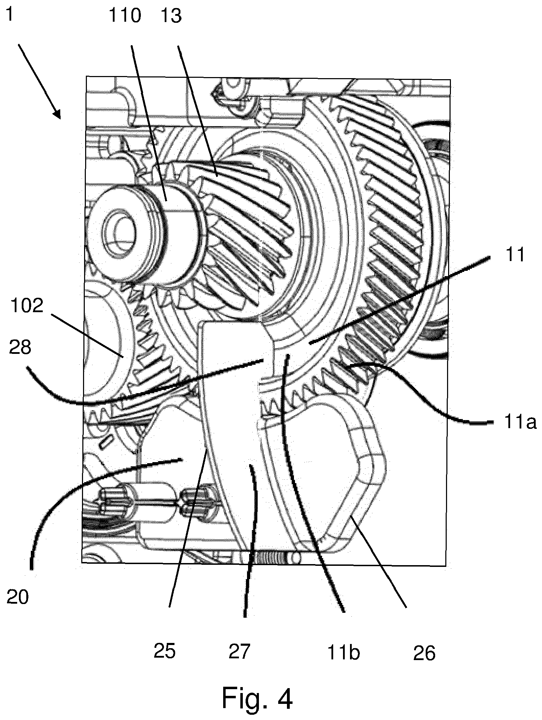

Dans ce mode de réalisation, la coopération du déflecteur 20 et de la première roue dentée 11 du deuxième rapport est représenté sur la figure 4.

La première roue dentée 11 du deuxième rapport comprend une gorge annulaire 11b agencée autour de l'axe de rotation X et ouverte axialement sur un des côtés de la première roue dentée 11.

Le déflecteur 20 comprend une rampe 25 apte à guider le lubrifiant. Une portion de la rampe 25 est agencée à l'intérieur de la gorge annulaire 11b de la première roue menée 11. La rampe 25 est configurée pour diriger le lubrifiant dans la gorge annulaire de manière à ce que le lubrifiant soit centrifugé par roue dentée et ainsi redirigée vers le haut du réducteur de vitesse.

La rampe 25 comprend notamment une surface cylindrique de guidage du lubrifiant qui est concentrique à la roue dentée d'entrée de différentiel 30 et un secteur d'écoulement 28 situé à l'extrémité de la rampe 25 et qui est logé dans le flan creusé 11b de la première roue dentée 11.

Le bord inférieur de la rampe 25 est de préférence agencé sous le niveau d'huile, en particulier sous le niveau nominal NN. Le niveau nominal correspond au niveau d'huile indicatif inscrit sur le réducteur, lorsque le véhicule est à l'arrêt. A défaut, le niveau nominal peut correspondre au plan horizontal passant par le bord inférieur de l'ouverture destinée au remplissage/vidange du réducteur. La première roue dentée 11 du deuxième rapport est agencée quant à elle totalement au-dessus du niveau nominal d'huile.

Le pignon de sortie 13 de l'arbre intermédiaire 110 est disposé au-delà d'une extrémité supérieure de la rampe 25 du déflecteur 20.

Le déflecteur 20 comporte aussi une portion de montage 26 s'étendant sensiblement dans un plan perpendiculaire à l'axe de rotation X. La portion de montage 26 comprend aussi une pluralité de plots de fixation 29 coopérant avec des logements 63 agencés dans le carter 60 du réducteur. Les plots de fixation 29 font saillie de la portion de montage 26.

Le dispositif de réduction 10 est logé généralement dans une enceinte close formée par le carter 60 et un couvercle de fermeture 70.

Le carter 60 et un couvercle de fermeture 70 sont assemblés l'un à l'autre et enferment le dispositif de réduction 10. Le carter 60 peut former aussi tout ou partie du carter de la machine électrique.

Dans ce deuxième mode de réalisation, le réducteur de vitesse 1 comprend également un collecteur 50 de réception et de distribution de lubrifiant disposée dans le carter 60 entre la paroi périphérique 62 et le premier axe de rotation X. Ce collecteur 50 a la particularité de comprendre un premier réservoir 51 et un deuxième réservoir 52 disposés de part et d'autre de la première roue dentée.

Comme illustré sur les figures 4 et 5, le premier réservoir 51 et le deuxième réservoir 52 sont reliés par l'intermédiaire d'une première gouttière 56 et d'une deuxième gouttière 57 acheminant le lubrifiant depuis le premier réservoir vers le deuxième réservoir sous l'effet de la gravité. Ainsi, il est possible de distribuer le lubrifiant vers différentes zones du collecteur. Dans ce collecteur 50, la première gouttière 56 et la deuxième gouttière 57 sont espacées axialement selon le premier axe de rotation X et disposés de part et d'autre de l'ouverture centrale 53 pour laisser passer les projections de lubrifiant issues de la denture de la première roue dentée. Le collecteur présente dans cet exemple une forme de O. Les deux réservoirs 51, 52 s'étendent parallèlement à l'axe de rotation X. Le collecteur 50 comporte une pluralité de trous ou conduites 59 permettant de laisser couler des filets d'huile de lubrification sur différentes zones du réducteur de vitesse.

Le collecteur 50 est maintenu en position partiellement par le carter 60 et partiellement par le couvercle de fermeture 70. La carter 60 comprend ainsi deux logements de montage 63 coopérant avec deux plots de fixation 59 du collecteur et le couvercle de fermeture 70 comprend deux autres logements de montage 63 coopérant avec deux autres plots de fixation 59 du collecteur.

La paroi périphérique 62 du carter 60 participe à la récupération de lubrifiant en étant disposée à proximité de la partie supérieure du collecteur, le lubrifiant retombant par gravité dans le collecteur. Le collecteur occupe une position centrale au sein du réducteur de vitesse ce qui lui permet de recevoir toutes les projections de lubrifiant en provenance de la première roue dentée mais aussi d'autres roues dentées présentes également au sein du réducteur de vitesse.

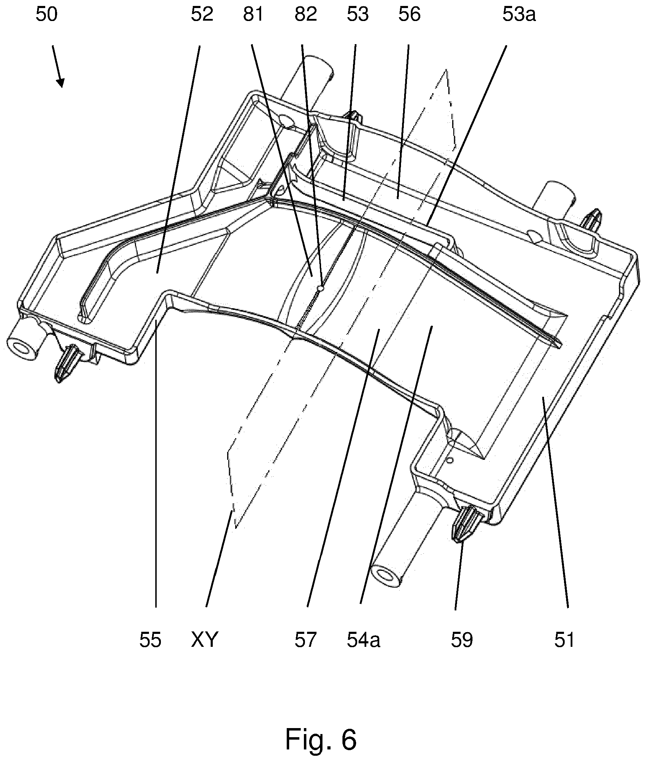

De manière avantageuse, le collecteur 50 de réception et de distribution de lubrifiant comprend une échancrure 55 de passage de la deuxième roue dentée 12 mobile en rotation autour du premier axe de rotation X. L'échancrure assure un passage partiel de la deuxième roue dentée 12 entre les deux réservoirs 51, 52. Il est alors possible de récupérer du lubrifiant projeté par cette deuxième roue dentée 12 également. Dans cet exemple, le premier arbre 110 porte de façon coaxiale une pluralité de roues dentées, dont la première roue dentée 1 et la deuxième roue dentée 12, le collecteur 50 recouvrant la périphérie externe d'au moins une des roues dentées. Dans le cas présent, le collecteur 50 recouvre la périphérie externe 11a de la première roue dentée 12 par l'intermédiaire d'une portion de surface cylindrique 54a. Comme illustré sur la figure 6, la portion de surface cylindrique 54a forme le fond de la gouttière 57.

Cette portion de surface cylindrique 54a comprend une forme concave 81 situé sur le dessus du collecteur 50 de rétention d'huile. Un trou 82 est formé au centre de cette zone concave 81 afin de laisser couler un filet d'huile de lubrification sur une zone précise du réducteur de vitesse.

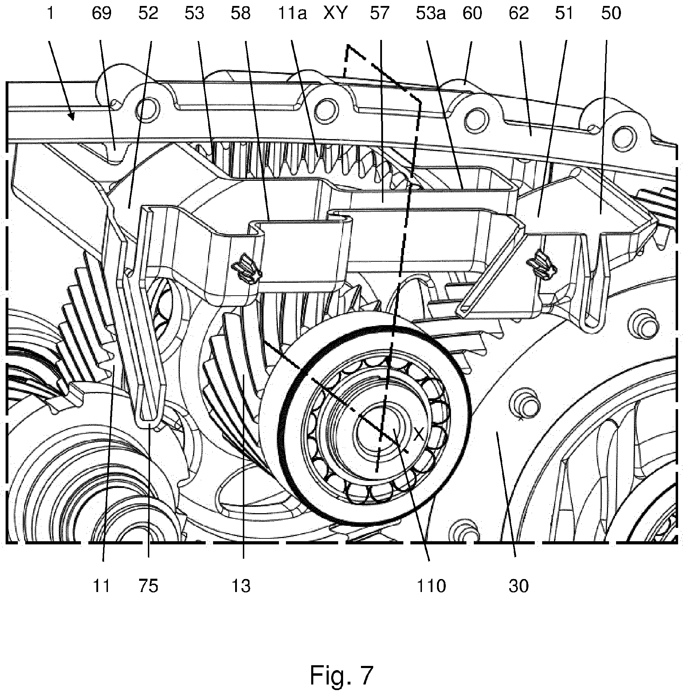

On va maintenant décrire en référence à la figure 7, un réducteur de vitesse 1 selon un troisième mode de réalisation de l'invention qui se distingue du premier mode par le fait que le collecteur 50 de réception et de distribution de lubrifiant comporte une ouverture centrale 53 au sein de laquelle la première roue dentée 11 est insérée partiellement de manière à pouvoir projeter du lubrifiant depuis la denture vers le récipient du collecteur et par le fait que la périphérie externe 11a de la première roue dentée s'étend radialement au-delà du pourtour intérieur 53a de l'ouverture centrale.

Dans ce troisième mode de réalisation, le premier réservoir 51 et le deuxième réservoir 52 sont reliés par l'intermédiaire d'une première gouttière 56 et d'une deuxième gouttière 57 acheminant le lubrifiant depuis le premier réservoir vers le deuxième réservoir sous l'effet de la gravité. Ainsi, il est possible de distribuer le lubrifiant vers différentes zones du collecteur. Dans ce collecteur 50 de réception et de distribution de lubrifiant, la première gouttière 56 et la deuxième gouttière 57 sont espacées axialement selon le premier axe de rotation X et disposés de part et d'autre de l'ouverture centrale 53 pour laisser passer les projections de lubrifiant issues de la denture de la première roue dentée 11. Le collecteur 50 de réception et de distribution de lubrifiant comporte une pluralité de goulottes 75 permettant de laisser couler des filets d'huile de lubrification sur différentes zones du réducteur de vitesse.

La goulotte 75 comprend un fond et deux rebords qui guident le lubrifiant au plus près de la zone du réducteur à lubrifier. La sortie de la goulotte 75 est située en dessous du fond du réservoir du collecteur.

Avantageusement, le carter 60 comporte sur la face interne de la paroi périphérique 62 un larmier 69 situé à l'aplomb du collecteur 50, le larmier 69 prenant la forme d'une excroissance de matière. Dans cet exemple, le profil du larmier 69 est linéique et orienté dans le sens de démoulage du carter 60 obtenu par fonderie. Le larmier 69 permet de récupérer davantage de lubrifiant au sein du collecteur 50. Le lubrifiant qui ruissèle le long de la paroi périphérique retourne préférentiellement au sein du collecteur en suivant la forme du larmier plutôt que de retourner directement dans le fond du réducteur de vitesse. Le lubrifiant retombe dans le collecteur en coulant goutte à goutte depuis le larmier 69.

Dans les différents modes de réalisation décrits ici, le déflecteur 20 permet de remonter de l'huile dans une zone centrale du réducteur pourtant encombrée par l'arbre intermédiaire 110, les roues dentées 11, 12 et le pignon de sortie 13.

Naturellement, l'invention est décrite dans ce qui précède à titre d'exemple. Il est entendu que l'homme du métier est à même de réaliser différentes variantes de réalisation de l'invention sans pour autant sortir du cadre de l'invention. Par exemple, l'invention qui a été décrite ici dans le cadre d'un réducteur de vitesse à un seul rapport peut aussi être appliquée sur un réducteur de vitesse à deux rapports de vitesse voir plus de deux rapports. L'invention peut également être appliquée aux boites de vitesses.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Réducteur de vitesse (1) pour un groupe motopropulseur, comprenant dans un repère orthogonal (XYZ) :
- un dispositif de réduction (10) comprenant un premier arbre (110) s'étendant le long d'un premier axe de rotation (X) et portant de façon coaxiale une première roue dentée (11),
- un carter (60) en forme de creux comprenant une embase (61) et une paroi périphérique (62) issue de matière avec l'embase, la paroi périphérique entourant en partie le dispositif de réduction,
- un collecteur (50) de réception et de distribution de lubrifiant disposé dans le carter (60) entre la paroi périphérique (62) et le premier axe de rotation (X), dans lequel le collecteur (50) de réception et de distribution de lubrifiant comprend un premier réservoir (51) et un deuxième réservoir (52) disposés de part et d'autre de la première roue dentée (11), **caractérisé en ce que** le premier réservoir (51) et le deuxième réservoir (52) sont reliés par l'intermédiaire d'une première gouttière (56) et d'une deuxième gouttière (57) distinctes distribuant le lubrifiant indifféremment entre le premier réservoir et le deuxième réservoir sous l'effet de la gravité, de sorte que le premier réservoir (51), le deuxième réservoir (52), la première gouttière (56) et la deuxième gouttière (57) forment un récipient commun apte à recevoir le lubrifiant projeté au sein du carter.

2. Réducteur de vitesse (1) selon la revendication 1, dans lequel la périphérie externe (11a) de la première roue dentée (11) s'étend radialement au-delà du pourtour extérieur (58) du premier réservoir (51) ou du deuxième réservoir (52).

3. Réducteur de vitesse (1) selon la revendication 1 ou 2, dans lequel au moins le premier réservoir (51) comprend une portion de surface cylindrique (54a) concentrique au premier axe de rotation (X).

4. Réducteur de vitesse (1) selon l'une des revendications 1 à 3, dans lequel la paroi périphérique (62) du carter (60) comprend une surface cylindrique (63) coaxiale au premier axe de rotation (X) qui entoure partiellement la périphérie externe de la première roue dentée (11).

5. Réducteur de vitesse (1) selon l'une des revendications précédentes, dans lequel le premier réservoir (51) et le deuxième réservoir (52) sont disposés de part et d'autre d'un premier plan géométrique (XY) passant par le premier axe de rotation (X) et le deuxième axe (Y) du repère orthogonal (XYZ) perpendiculaire au premier axe de rotation, le premier plan géométrique (XY) traversant la paroi périphérique (62) du carter (60) selon une direction sensiblement perpendiculaire à celle-ci.

6. Réducteur de vitesse (1) selon l'une des revendications précédentes, dans lequel le premier réservoir (51) comprend un premier fond (51a) et le deuxième réservoir (52) comprend un deuxième fond (52a), le premier fond étant décalé axialement par rapport au deuxième fond selon le deuxième axe (Y).

7. Réducteur de vitesse (1) selon l'une des revendications précédentes, dans lequel la première gouttière (56) et la deuxième gouttière (57) sont espacées axialement selon le premier axe de rotation (X) et disposés de part et d'autre d'une ouverture centrale (53) pour laisser passer les projections de lubrifiant issues de la denture de la première roue dentée.

8. Réducteur de vitesse (1) selon l'une des revendications précédentes, dans lequel la première roue dentée (11) tourne autour du premier axe de rotation selon un sens privilégié, le premier réservoir (51) faisant face à la première roue dentée (11) de manière à recevoir le lubrifiant projeté par la denture.

9. Réducteur de vitesse (1) selon l'une des revendications précédentes, dans lequel le dispositif de réduction (10) comprend un deuxième arbre (120) s'étendant le long d'un deuxième axe de rotation (X2) et portant de façon coaxiale une roue dentée d'entrée de différentiel (30), la roue dentée d'entrée de différentiel étant immergée partiellement dans le lubrifiant, et un déflecteur (20) disposé dans le carter (60) comprenant une rampe (25) apte à guider le lubrifiant en direction de la première roue dentée.

10. Réducteur de vitesse (1) selon la revendication précédente, dans lequel la rampe (25) comprend une surface cylindrique de guidage du lubrifiant qui est concentrique à la roue dentée d'entrée de différentiel (30).

11. Réducteur de vitesse (1) selon la revendication précédente, dans lequel le déflecteur (20) est fabriqué dans une pièce distincte du carter (60) et dans lequel la rampe (25) comprend un secteur d'écoulement (28) situé à l'extrémité de la rampe (25) et qui est logé dans le flan creusé de la première roue dentée.

12. Réducteur de vitesse (1) selon l'une des revendications précédentes, dans lequel un couvercle de fermeture (70) est rapporté sur le carter (60) de sorte à former une enceinte close autour du dispositif de réduction (10), le collecteur (50) étant maintenu en position partiellement par le carter (60) et partiellement par le couvercle de fermeture (70).

## Patentansprüche

1. Untersetzungsgetriebe (1) für einen Antriebsstrang, umfassend in einem orthogonalen Koordinatensystem (XYZ):
- eine Untersetzungsvorrichtung (10) mit einer ersten Welle (110), die sich entlang einer ersten Drehachse (X) erstreckt und koaxial ein erstes Zahnrad (11) trägt,
- ein hohlförmiges Gehäuse (60) mit einem Sockel (61) und einer mit dem Sockel einstückigen Umfangswand (62), wobei die Umfangswand die Untersetzungsvorrichtung teilweise umgibt,
- einen Sammler (50) zum Aufnehmen und Verteilen von Schmiermittel, der im Gehäuse (60) zwischen der Umfangswand (62) und der ersten Drehachse (X) angeordnet ist,
wobei der Sammler (50) zum Aufnehmen und Verteilen von Schmiermittel einen ersten Behälter (51) und einen zweiten Behälter (52) umfasst, die beidseitig des ersten Zahnrades (11) angeordnet sind, **dadurch gekennzeichnet, dass** der erste Behälter (51) und der zweite Behälter (52) über eine erste und eine zweite separate Rinne (56, 57) verbunden sind, die das Schmiermittel unter der Wirkung der Schwerkraft unterschiedslos zwischen dem ersten Behälter und dem zweiten Behälter verteilen, so dass der erste Behälter (51), der zweite Behälter (52), die erste Rinne (56) und die zweite Rinne (57) einen gemeinsamen Behälter bilden, der das in das Gehäuse gesprühte Schmiermittel aufnehmen kann.

2. Untersetzungsgetriebe (1) nach Anspruch 1, wobei der Außenumfang (11a) des ersten Zahnrades (11) sich radial über den Außenumfang (58) des ersten Behälters (51) oder des zweiten Behälters (52) hinaus erstreckt.

3. Untersetzungsgetriebe (1) nach Anspruch 1 oder 2, wobei mindestens der erste Behälter (51) einen zur ersten Drehachse (X) konzentrischen zylindrischen Flächenabschnitt (54a) aufweist.

4. Untersetzungsgetriebe (1) nach einem der Ansprüche 1 bis 3, wobei die Umfangswand (62) des Gehäuses (60) eine zur ersten Drehachse (X) koaxiale zylindrische Fläche (63) aufweist, die den Außenumfang des ersten Zahnrades (11) teilweise umgibt.

5. Untersetzungsgetriebe (1) nach einem der vorstehenden Ansprüche, wobei der erste Behälter (51) und der zweite Behälter (52) beiderseits einer ersten geometrischen Ebene (XY) angeordnet sind, die durch die erste Drehachse (X) und die zweite Achse (Y) des orthogonalen Koordinatensystems (XYZ) senkrecht zur ersten Drehachse verläuft, wobei die erste geometrische Ebene (XY) die Umfangswand (62) des Gehäuses (60) in einer Richtung durchquert, die im Wesentlichen senkrecht zu dieser ist.

6. Untersetzungsgetriebe (1) nach einem der vorstehenden Ansprüche, wobei der erste Behälter (51) einen ersten Boden (51a) und der zweite Behälter (52) einen zweiten Boden (52a) aufweist, wobei der erste Boden gegenüber dem zweiten Boden um die zweite Achse (Y) axial versetzt ist.

7. Untersetzungsgetriebe (1) nach einem der vorstehenden Ansprüche, wobei die erste Rinne (56) und die zweite Rinne (57) axial entlang der ersten Drehachse (X) beabstandet und beiderseits einer zentralen Öffnung (53) angeordnet sind, um die von der Verzahnung des ersten Zahnrades ausgehenden Schmiermittelauswürfe durchzulassen.

8. Untersetzungsgetriebe (1) nach einem der vorstehenden Ansprüche, wobei das erste Zahnrad (11) um die erste Drehachse in einer bevorzugten Richtung dreht, wobei der erste Behälter (51) dem ersten Zahnrad (11) gegenüberliegt, um das von der Verzahnung verspritzte Schmiermittel aufzunehmen.

9. Untersetzungsgetriebe (1) nach einem der vorstehenden Ansprüche, wobei die Untersetzungsvorrichtung (10) eine zweite Welle (120) umfasst, die sich entlang einer zweiten Drehachse (X2) erstreckt und koaxial ein Differentialeingangsritzel (30) trägt, wobei das Differentialeingangsritzel teilweise in das Schmiermittel eintaucht, und eine im Gehäuse (60) angeordnete Ablenkplatte (20) mit einer Rampe (25), die das Schmiermittel in Richtung des ersten Zahnrades leiten kann.

10. Untersetzungsgetriebe (1) nach dem vorstehenden Anspruch, wobei die Rampe (25) eine zylindrische Schmiermittel-Führungsfläche aufweist, die konzentrisch zum Differential-Eingangsrad (30) ist.

11. Untersetzungsgetriebe (1) nach dem vorherigen Anspruch, wobei der Deflektor (20) aus einem vom Gehäuse (60) getrennten Teil hergestellt ist und wobei die Rampe (25) einen am Ende der Rampe (25) angeordneten Auslaufbereich (28) aufweist, der in der Ausnehmung des ersten Zahnrades aufgenommen ist.

12. Untersetzungsgetriebe (1) nach einem der vorstehenden Ansprüche, wobei ein Verschlussdeckel (70) so am Gehäuse (60) angebracht ist, dass er eine geschlossene Umhüllung um die Untersetzungsvorrichtung (10) bildet, wobei der Verteiler (50) teilweise vom Gehäuse (60) und teilweise vom Verschlussdeckel (70) in seiner Position gehalten wird.

## Claims

1. Speed reducer (1) for a powertrain, comprising, in an orthogonal frame of reference (XYZ):
- a reduction device (10) comprising a first shaft (110) extending along a first axis of rotation (X) and coaxially carrying a first toothed wheel (11),
- a housing (60) with a hollow shape comprising a base (61) and a peripheral wall (62) integrally formed with the base, the peripheral wall partially surrounding the reduction device,
- a lubricant-receiving and -distributing collector (50) arranged in the housing (60) between the peripheral wall (62) and the first axis of rotation (X),
wherein the lubricant-receiving and -distributing collector (50) comprises a first reservoir (51) and a second reservoir (52) which are arranged on either side of the first toothed wheel (11), **characterized in that** the first reservoir (51) and the second reservoir (52) are connected via a first gutter (56) and a second gutter (57) which are separate and which distribute the lubricant indiscriminately between the first reservoir and the second reservoir under the effect of gravity, so that the first reservoir (51), the second reservoir (52), the first gutter (56) and the second gutter (57) form a common receptacle able to receive the lubricant projected within the housing.

2. Speed reducer (1) according to Claim 1, wherein the outer periphery (11a) of the first toothed wheel (11) extends radially beyond the outer perimeter (58) of the first reservoir (51) or the second reservoir (52).

3. Speed reducer (1) according to Claim 1 or 2, wherein at least the first reservoir (51) comprises a cylindrical surface portion (54a) concentric with the first axis of rotation (X).

4. Speed reducer (1) according to one of Claims 1 to 3, wherein the peripheral wall (62) of the housing (60) comprises a cylindrical surface (63) coaxial with the first axis of rotation (X) that partially surrounds the outer periphery of the first toothed wheel (11).

5. Speed reducer (1) according to one of the preceding claims, wherein the first reservoir (51) and the second reservoir (52) are arranged on either side of a first geometric plane (XY) passing through the first axis of rotation (X) and the second axis (Y) of the orthogonal frame of reference (XYZ) perpendicular to the first axis of rotation, the first geometric plane (XY) passing through the peripheral wall (62) of the housing (60) in a direction substantially perpendicular thereto.

6. Speed reducer (1) according to one of the preceding claims, wherein the first reservoir (51) comprises a first bottom (51a) and the second reservoir (52) comprises a second bottom (52a), the first bottom being offset axially with respect to the second bottom along the second axis (Y).

7. Speed reducer (1) according to one of the preceding claims, wherein the first gutter (56) and the second gutter (57) are spaced axially along the first axis of rotation (X) and arranged on either side of a central opening (53) to allow the lubricant projections coming from the toothing of the first toothed wheel to pass through.

8. Speed reducer (1) according to one of the preceding claims, wherein the first toothed wheel (11) rotates about the first axis of rotation in a preferred direction, the first reservoir (51) facing the first toothed wheel (11) so as to receive the lubricant projected by the toothing.

9. Speed reducer (1) according to one of the preceding claims, wherein the reduction device (10) comprises a second shaft (120) extending along a second axis of rotation (X2) and coaxially carrying a differential input toothed wheel (30), the differential input toothed wheel being partially immersed in the lubricant, and a deflector (20) arranged in the housing (60) comprising a ramp (25) able to guide the lubricant in the direction of the first toothed wheel.

10. Speed reducer (1) according to the preceding claim, wherein the ramp (25) comprises a cylindrical lubricant guide surface which is concentric with the differential input toothed wheel (30).

11. Speed reducer (1) according to the preceding claim, wherein the deflector (20) is manufactured from a part separate from the housing (60) and wherein the ramp (25) comprises a flow sector (28) located at the end of the ramp (25) and housed in the hollowed-out flank of the first toothed wheel.

12. Speed reducer (1) according to one of the preceding claims, wherein a closure cover (70) is fitted to the housing (60) so as to form a closed enclosure around the reduction device (10), the lubricant-receiving and -distributing collector (50) being held in position partially by the housing (60) and partially by the closure cover (70).
